(19)

Europäisches
Patentamt
European
Patent Office
Office européen
des brevets

(11) **EP 2 392 910 A2**

(12) # EUROPEAN PATENT APPLICATION

(43) Date of publication:
**07.12.2011 Bulletin 2011/49**

(51) Int Cl.:
**G01N 9/00** (2006.01)

(21) Application number: **10195936.9**

(22) Date of filing: **20.12.2010**

<table>
<tr><td>

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **02.06.2010 US 350744 P**

(71) Applicants:
• **Moore, Barry**
 **Calgary AB T2Z 2J2 (CA)**

</td><td>

• **Moore, Philip**
 **Calgary AB T3Z 0A5 (CA)**

(72) Inventors:
• **Moore, Barry**
 **Calgary AB T2Z 2J2 (CA)**
• **Moore, Philip**
 **Calgary AB T3Z 0A5 (CA)**

(74) Representative: **Zardi, Marco**
 **M. Zardi & Co. S.A.**
 **Via Pioda 6**
 **6900 Lugano (CH)**

</td></tr>
</table>

(54) **Method and apparatus for measuring the density of a flowing fluid in a conduit using differential pressure**

(57)   A method and apparatus for determining the specific gravity of a monophasic or polyphasic fluid flowing in a conduit. The apparatus employs an square wave shaped tube known for its effectiveness in differential pressure measurements. The apparatus is configured such that the differential pressure is measured in cross-wise manner Pressure taps comprising high and low pressure taps for a respective pressure sensing device are associated with a different leg. The apparatus has also been found to be effective for determining flow rate of the fluid in the conduit using differential pressure measurements.

**FIG. 1**

EP 2 392 910 A2

**Description**

**FIELD OF THE INVENTION**

The present invention relates to a method for measuring a fluid flowing in a conduit and more particularly, the present invention relates to a method of such measurement using differential pressure.

**BACKGROUND ART**

A number of arrangements have been developed to measure fluid properties. As an example, in United States Patent No. 2,768,529, dated October 30, 1956, there is shown an inverted U tube with two differential pressure devices with one mounted on each arm of the U. The patent also provides the complete mathematical analysis showing the elimination of the friction effect. This reference establishes the straight arm art for measuring specific gravity as early as 1956.

In United States Patent No, 6,550,327 issued to Van Berk, April 22, 2003, there is disclosed a device for measuring the density of a flowing medium.

The device includes a pipe section in loop form having two arms which make an angle with the horizontal, which arms each contain two pressure sensors which are located some distance apart in the direction of flow, as well as a processing unit, connected to the pressure sensors, for determining the density of the medium on the basis of the pressures or an associated parameter measured by the sensors. The pipe section in loop form is connected in parallel to the pipeline.

*Turner et al.,* in United States Patent No. 3,926,050, issued December 16, 1975, teach a method and apparatus for determining the quantity of solids in a slurry of solids and liquid flowing in a pipeline by the multiplication product of the specific gravity and velocity of the slurry. Specific gravity is determined as the function of the pressure differential between taps in the logs of a U-bend and velocity is determined as the pressure differential between horizontal taps in an elbow of the U-bend. In addition to multiplying means for deriving solids flow rate, the invention includes integrating means for determining total solids flow and means for separately visually displaying specific gravity, velocity, rate of solids flow and total flow of solids.

In United States Patent No. 6,807,857, issued October 6, 2004, to Storm, Jr. et al.*,* there is disclosed a process and apparatus for determining the density of a flowing fluid without requiring knowledge of the fluid's rheological properties. The process of the current invention is capable of providing continuous "real time" analysis of fluid density. The apparatus of the current invention comprises at least two pressure assessment zones fitted with fluid pressure sensing points. Pressure sensing devices connected to the pressure sensing points provide the data necessary to enable the calculation of fluid density.

Other references in the realm of activity of the instant invention include United States Patent No. 5,608,170, issued to Atkinson et al., March 4, 1997. In the document, the Patentee's teach an apparatus for measuring a multiphase fluid flow. The apparatus has a first section and a second section, each having a flow passage with means for effecting a dynamic pressure measurement on the multiphase fluid flow running there through. It is indicated that the geometry of the first section and the second section differ from each other to affect a relationship between void fraction and velocity for the phases. There is also a method disclosed which directs the flow of fluids through a pair of passages with intermittent isolation.

In United States Patent No. 5,461,930, issued October 31, 1995, to Farchi et al.*,* there is disclosed an apparatus and method for measuring two or three phase fluid of flow utilizing one or more momentum flow meters and a volumetric flow meter. The apparatus is fairly extensive and includes a processor for calculation of flow rates and the components of flow by solving volumetric flow and momentum energy equations. The apparatus includes other processors and is thus somewhat complex.

In International Application Number PCT/NO 94/000131, *Kyllingstad* teaches a method and apparatus for measuring density and pressure drop in a flowing fluid. In the publication, the arrangement includes a pipe loop with two arms coupled together at the bend. Pressure centres are coupled to one of the arms and are adapted to measure a pressure difference across a certain distance. Additional sensors are coupled to be opposite arm and are adapted to measure a second pressure difference across the second distance. The liquid density can therefore be determined by the pressure differences and distances.

A multiphase fluid flow measurement method is taught in United States Patent No. 5,400,657 issued March 28, 1995, to Kolpak et al. The document discusses measurement of oil, water and gas. The system includes two densitometers for measuring the multiphase fluid density flowing through a conduit flow restrictor. The arrangement includes a pump, heat exchanger or expander interposed in the flow line between the densitometers to effect a pressure or temperature change in the fluid. Pressure, temperature and density are measured in the upstream and/or the downstream sites of the flow restriction pump, expander or battery heat exchanger and the values of the density pressure and temperature are used to obtain a flow rate of the respective phases in the flow stream.

*Rosenblum,* in United States Patent No. 4,307,609, issued December 29, 1981 provides a liquid density meter. Similar to many of the other references, this reference provides an apparatus where two pressure sensors are adapted to be mounted in the liquids of their vertically predetermined distances apart. A pressure transducer and tubing including a differential pressure zeroing device interconnect the sensors to the differential pressure transducer. This provides an output which is proportional to the density of the liquid which is compensated for the differential pressure caused by the differential height of the pressure sensors in the liquid.

As known in this area of technology, flow straighteners or sufficient lengths of straight pipe to eliminate velocity profile effects on pressure measurements are required in certain arrangements. In United States Patent No. 5,596,152, issued January 21, 1997, Bergervoet et al. teach a flow straightener for a turbine wheel gas meter.

In terms of other advances in this area Fincke, in United States Patent No. 6,546,811, issued April 15, 2003, provides a multiphase flow calculation software arrangement which calculates liquid gas phase mass flow rates.

Other references generally relevant to the area of technology disclosed herein include United States Patent Nos. 4,856,344, 5,509,303, 6,655,221, 5,591,922, 6,321,585, 6,957,586, 4,949,572 3,488,996, 5,469,749, 7,299,707 and 5,392,645.

## THE DISCLOSURE OF THE INVENTION

The invention relates to a method and apparatus for measuring the specific gravity of a lowing fluid in a conduit.

An object of one embodiment of the present invention is to provide a device for determining the specific gravity of a flowing fluid in a conduit, comprising:

> a conduit for receiving the flowing fluid having a uniform cross section with a square wave profile, the legs of the profile being equivalent in length, each leg of the legs having a pressure sensing means;
>
> pressure taps associated with each pressure sensing means, the taps for a respective pressure sensing means being associated with a different leg of the legs.

Another object of one embodiment of the present invention is to provide a method for determining the specific gravity of a flowing fluid, comprising:

> providing the apparatus as set forth herein;
>
> passing a fluid to be measured through the conduit;
>
> measuring the pressure from diagonally oriented taps;
>
> determining the differential pressure; and
>
> determining the density of the fluid.

Conveniently, the apparatus discussed herein may be used to determine mono and polyphasic fluids and in the case of gas containing fluid stream the pressure is decreasing consequently it may outgas whereas in a descending stream the pressure is increasing which will keep the gas in solution.

One of the many advantages to the technology set forth herein is that since the pressure drop measurements occur in overlapping areas of piping which ,eliminates elbow effects ,there is a single assessment zone. this allows the arrangement to be considerably more compact and therefore more practical than the devices requiring velocity profile cancelling sections in advance of the pressure taps. This is particularly significant when applying this principal to larger diameter piping systems.

Owing to the fact that identical pipe runs are used upstream of the measurement sections and the pressure tap is perpendicular to the plane of the upstream elbow, the need for long and straight pipe runs is avoided and static pressure can be derived since the velocity profile effects are identical in symmetrical piping configurations and can therefore be cancelled out to derive a static pressure.

The apparatus can operate in either an inverted or upright square wave configuration and one of the main principals of the device is to present symmetrical piping configurations upstream and downstream of both pressure taps connected to each differential pressure transducer. This therefore creates the need for a straight horizontal section at the top of the square wave between two symmetrical elbows thus it is a square U. This is a point of distinction relative to the prior art. In the prior art, a continuous or long radius bend between the top two pressure taps which defeats the symmetry and thus the velocity profile effects cannot be cancelled out close to the bend.

Having thus generally described the invention, reference will now be made to the accompanying drawings, illustrating preferred embodiments.

## BRIEF DESCRIPTION OF THE DRAWINGS

Figure 1 is a schematic illustration of the apparatus employed to perform the measurements;

Figure 2 is a 24 hour recording of the data logger for switching from zero flow to full flow at sequence point 580 and back to zero flow at sequence point 1268 with the differential pressure transducers connected in the traditional straight leg configuration;

Figure 3 is a 24 hour recording of the data logger for the switching from full to zero flow at sequential point 695 and back to full flow at 1182 with the differential pressure transducers connected in the proposed diagonal configuration using the same measurement assembly;

Figure 4 illustrates the comparison between the calculated and measured specific gravity of water flowing in the device at a range of flows from zero to 4 ft/sec;

Figure 5 illustrates the relationship between the differential pressure as measured by TX1 and the error for the same data set shown in Figure 4;

Figure 6 is a data plot confirming the accuracy of the net differential pressure and its freedom from velocity profile effects; and

Figure 7 is a plot of flow rate as a function of the square root of the sum of the differential pressures.

## DETAILED DESCRIPTION OF THE PREFERRED EMBODIMENTS

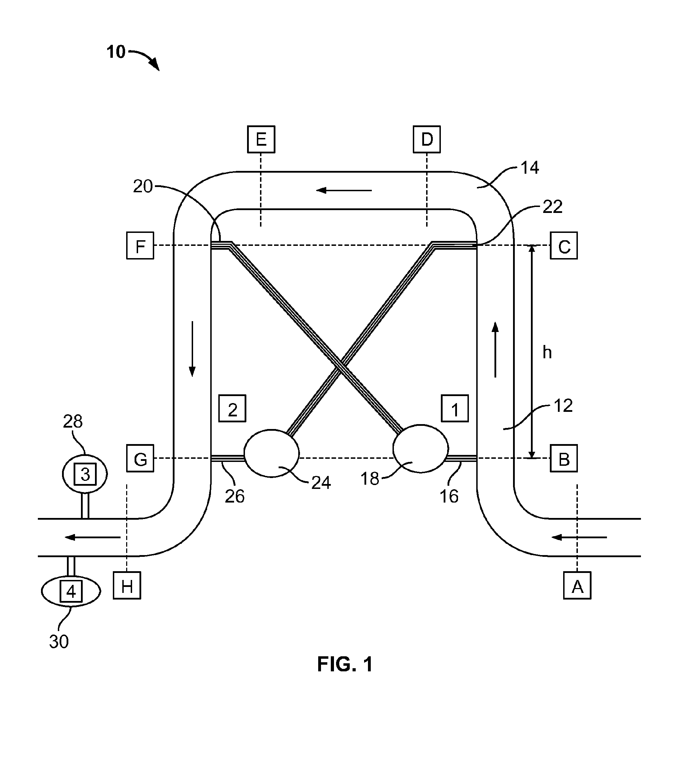

Referring initially to Figure 1, shown is an example of the apparatus for effecting the measurements. The apparatus is generally denoted by numeral 10 and comprises a conduit 12 having a square wave profile, shown in the example as an inverted U shaped bend 14 and straight section DE.

In Figure 1, the fluid enters the device at point A. A high pressure tap 16 for a transmitter 18 (TX1) is located immediately downstream of the elbow AB. The low pressure tap 20 for transmitter 18 is located immediately downstream of elbow EF at point F which is symmetrically located to the pressure tap at point B at elbow AB. The pressure taps 16 and 20 are oriented symmetrically consequently any velocity profile effect is cancelled out.

The high pressure tap 22 for a second transmitter 24 (TX2) is located at point C at the inlet to elbow CD and with straight pipe AB upstream of C. The low pressure tap 26 for transmitter 24 is located at the inlet to elbow GH and with straight pipe FG upstream. Velocity profile effects are therefore the same for the pressure taps on transmitters 24 and 18. In a symmetrical piping configuration the friction and piping loss effects are the same from B to F and C to G thus by subtracting transmitter 18 from transmitter 24 the resultant is twice the static head from B to C. Hence the density can be determined.

Pressure 28 and temperature 30 transmitters are shown for the device using compressible fluids, a typical example of which is steam and in particular wet steam where the quality of the steam can be determined. Temperature measurements of the flowing stream and the impulse line fluid and required to compensate for specific gravity changes due to temperature effects, this requirement is used in high accuracy devices.

Extensive testing was conducted to verify the repeatability of the velocity profile effects on the pressure taps.

The first series of tests were conducted on a test facility constructed from 1" PVC pipe and fittings using water as the circulating and impulse line fluid. The system was designed as shown in Figure 1 with 40" vertical between the pressure taps with the taps on each leg placed in the same horizontal plane. Two precision differential pressure transmitters were used which had a span of approximately 40" of water and an accuracy of 0.075% the span or 0.03" water.

The flow rate was measured by a paddle flow meter with an accuracy of approximately +/- 2%. The data was gathered by an Omega (TM) HE-XL-100 programmable controller with a removable memory card for data logging. Initially, data gathering was programmed to sequentially monitor the transmitters every 5 seconds with one snapshot every 15 seconds which was averaged over a minute and logged. A 10 minute average of the differential pressure snapshots was also recorded together with the flow accumulated per minute and the flow line and impulse line temperatures averaged over 1 minute.

Two tests were conducted for comparative purposes. The first with the transmitters connected in the conventional single leg manner as described in the referenced patents and the second in the cross over orientation of the present invention and as exemplified in Figure 1.

The connection configurations employed in the straight tap configuration were as follows. Tap 16 of transmitter 18 was connected to point B and the tap 20 to point C with the tap 22 of transmitter 24 connected to point G and the tap 26 to point F. The cross tap configuration had the tap 16 of transmitter 18 connected to point B and the tap 20 connected to F. Transmitter 24 had the tap 22 connected to G and the tap 26 to C.

The data was processed as follows:

Transmitter 18 and Transmitter 24 readings were added to obtain the net differential pressure DP 1.

DP 1 was then divided by 2 to obtain the net differential pressure in each leg (DP2) caused by the difference in density between the fluid in the impulse line and the fluid in the flow line.

DP2 is then divided by the distance between the taps (40") to obtain the differential pressure per inch i.e. the difference in specific gravity (DSG1).

DSG1 was then subtracted from the calculated specific gravity (SG) of the impulse line (SGi) to obtain the measured specific gravity in the flow line (SGm).

The specific gravities in the flow line (SGc) and impulse line (SGi) were calculated using the temperature correction from the Chemical Engineers Handbook, fifth edition 3-71.

The error is defined as SGc-SGm, where this number is negative it indicates the measured specific gravity is higher than the calculated.

The data gathered was part of an overall development program for a field installation facility incorporating this principle, as a result only those test results which were not affected by equipment development tests are included in this report.

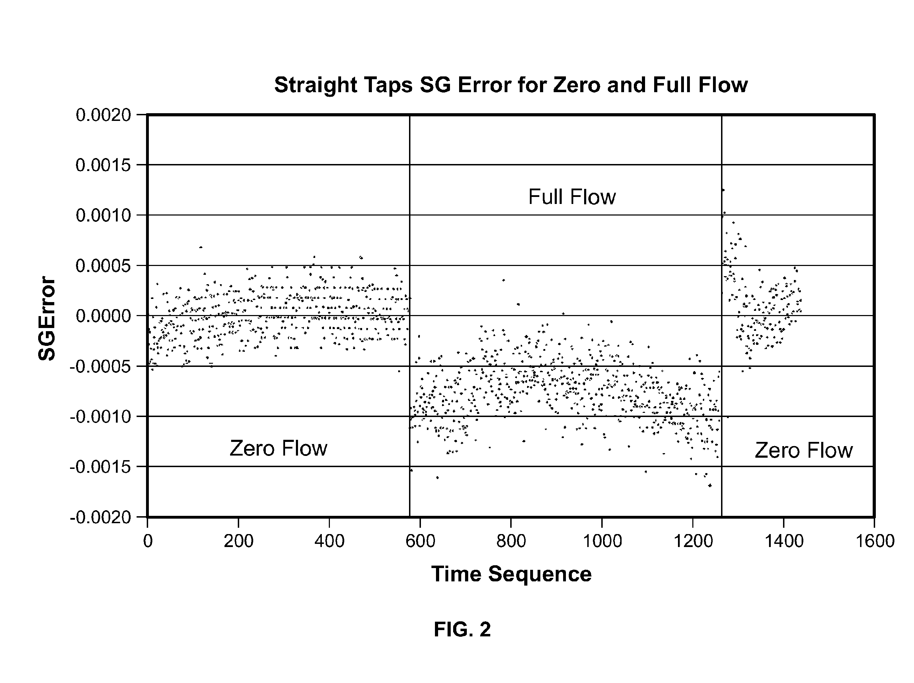

Figure 2 is a 24 hour recording of the data logger where the test facility was unattended except for switching from zero flow to full flow at sequence point 580 and back to zero flow at sequence point 1268. The transition in specific gravity error can be clearly seen between the flowing and static DP. The scatter band of the data points is approximately +/- 0.0005 SG. Static and +/- 0.0008 flowing.

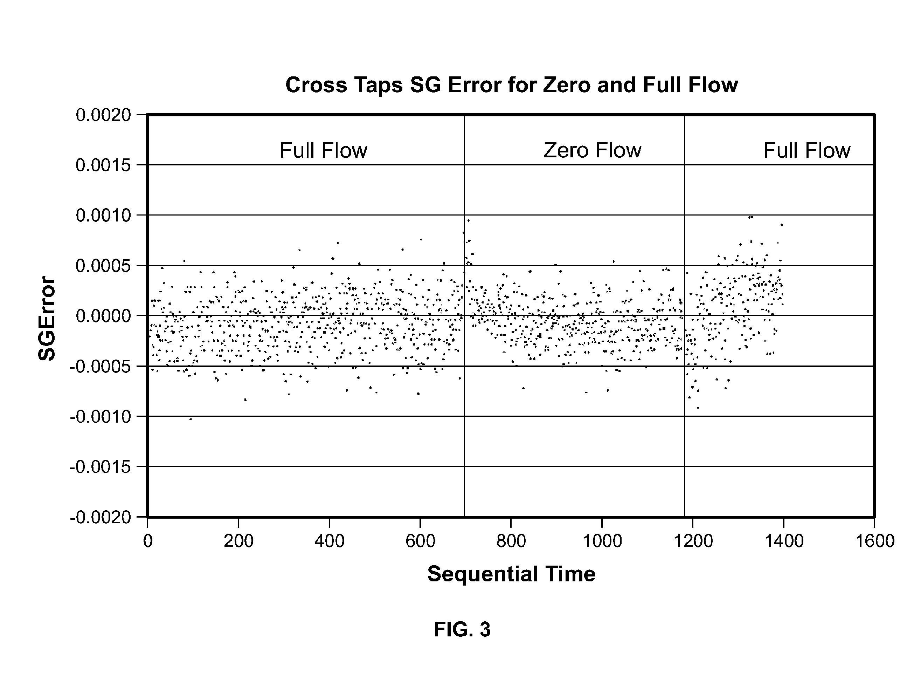

Figure 3 is a 24 hour recording of the data logger where the test facility was unattended except for the switching from full to zero flow at sequential point 695 and back to full flow at 1182. No significant change in specific gravity error was detected through the changes and the scatter band is approximately +/- 0.0005 SG throughout.

The change in net differential pressure after the calculation that is required to generate a 0.0005 SG error is 0.004 inches of water. The transmitter has a range of 40 inches of water thus 0.004 represents .01% of the range and the transmitters stated overall accuracy is .075% not including temperature drift effects, the improved accuracy was due to the sampling and averaging process, but clearly the results were limited by the accuracy of the transmitters.

When it is considered that the net differential pressure is the result of data from two transmitters, the scatter band is remarkably narrow and is attributed to the sampling and averaging techniques programmed into the logic controller.

The shift in specific gravity calculation, although small, clearly demonstrates the improvement in the cross tap connection over the straight tap connection and demonstrates the existence of an elbow effect, but that it is consistent and can be eliminated by designing the pressure taps for symmetrical inlet and outlet piping configurations.

After the preliminary tests, glycol was used as the impulse line fill fluid and the program was modified to include a lookup table for both the variation of specific gravities of water and glycol with temperature this data was taken from the Chemical Engineers Handbook.

At one stage, the high pressure 16,26 and low pressure connections 20,22 were reversed on transmitter 24. Thus the net DP calculation was derived from the difference of the transmitter readings as opposed to the sum. It was verified that this variation in connection had no effect on the specific gravity calculation data. The program was modified to take a snapshot of the two transmitters 18 and 24 at exactly the same time every 5 seconds. The snapshot data was accumulated for 5 minutes and averaged then stored in the data logger. The pulses from the flow meter were accumulated converted to US barrels and stored every 5 minutes. Temperatures were measured every 2 seconds, accumulated and averaged every 5 minutes then stored.

When there was a rapid change in temperature, it was noted that the temperature sensor for the flowing temperature, which was located on a steel tube, had a slow response time which produced some deviation between the measured and the calculated specific gravity of the flowing liquid.

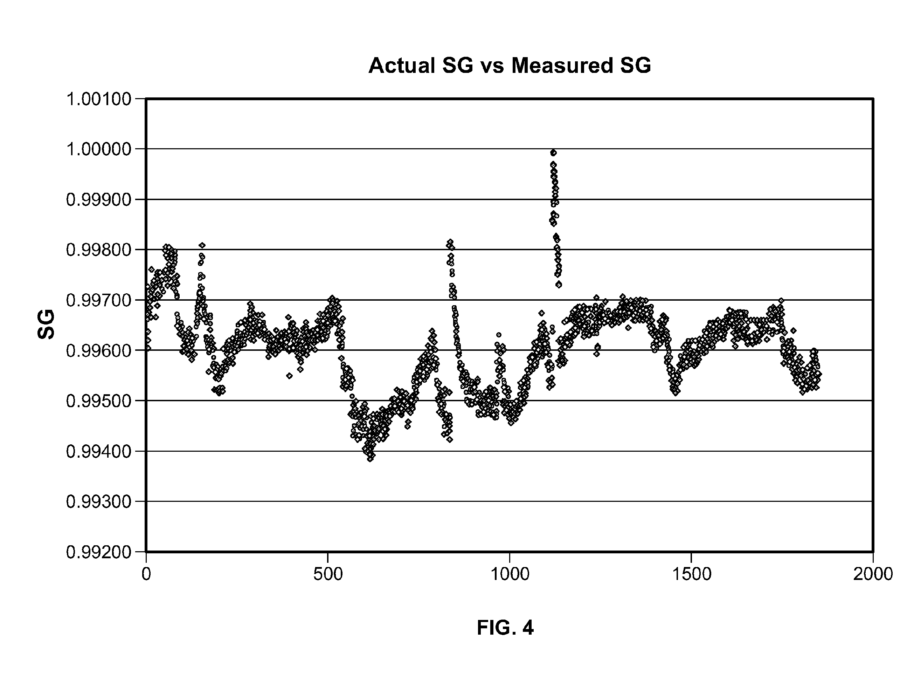

Figure 4 shows the comparison between the calculated and measured specific gravity of water flowing in the device at a range of flows from zero to 4 ft/sec (1.22 m/s). The maximum deviation between the calculated and measured specific gravities was found to be approximately 0.0005. This represents an error of+/-.05%. Figure 4 shows the result of 1870 data points, each point being an average of readings taken over a 5 minute period. The variations in specific gravity are caused by temperature fluctuations in the flowing liquid and impulse line fill. Breaks appear, since these readings were taken over a 12 day period and other tests were conducted in between the steady state runs to verify the practical application of the full device. In general a steady state run would extend for 1 to 5 hours.

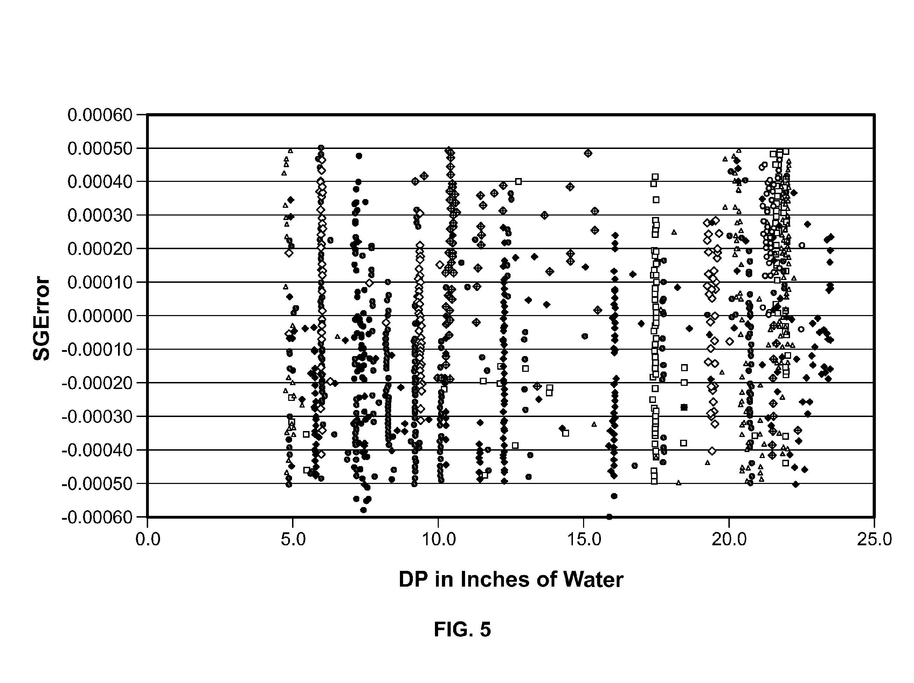

Figure 5 shows the relationship between the differential pressure as measured by 18 and the error for the same data set shown in Figure 4. The differential pressure measurement is an indication of flow rate with 5 being zero flow and representing the difference between the specific gravity of glycol and water and 23 is the maximum range of the transmitter in the positive direction, this represents a flow of approximately 4 ft/sec (1.22 m/s). The vertical columns of the same series points indicate a steady flow state condition, different series points represent a different day. The small horizontal displacements which are particularly noticeable at the zero flow position are an indication of varying specific gravity, The wider scatter particularly at the higher end of the DP range is indicative of the variation in DP of a single transmitter at the higher flow rates, but from Figure 4 which is a result of a calculation using the two transmitters, it can be seen that the scatter is cancelled and the net differential pressure is stable. This demonstrates that the elbow effects are repeatable and consistent and can be eliminated from the net differential pressure measurement.

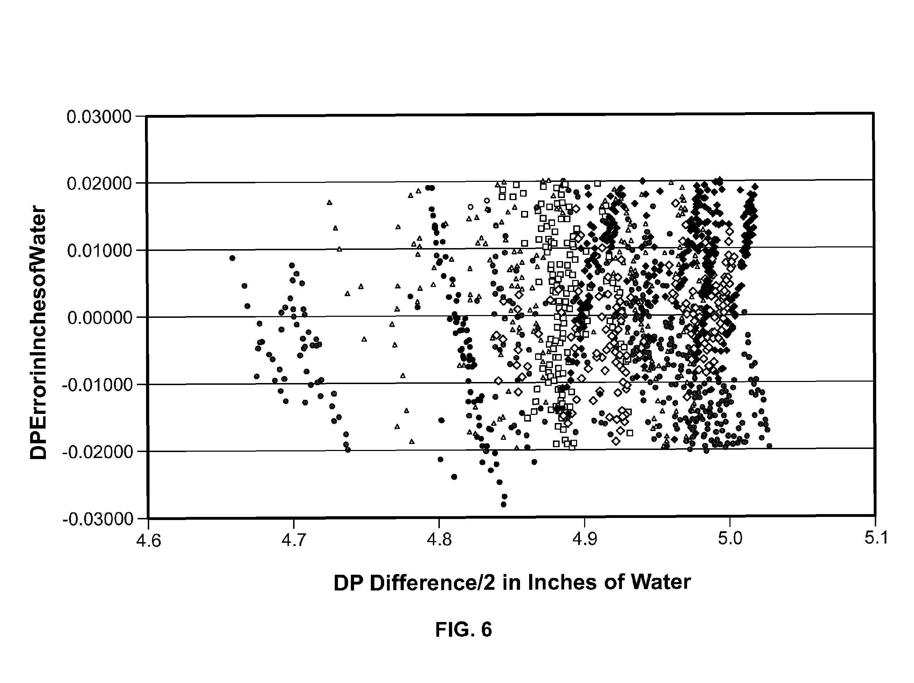

Figure 6 confirms the accuracy of the net differential pressure and its freedom from velocity profile effects. The same data set used in Figures 4 and 5 was used for Figure 6 where the specific gravity error was converted into an equivalent differential pressure and plotted against the net differential pressure calculated from the two transmitters. The net differential indicates the specific gravity, assuming the impulse line is reasonably constant a lower DP indicates a lower specific gravity. The same series markers were used for the same day in Figures 5 and 6 and it can be seen that there was no correlation between flow, the net DP or the error in the net DP.

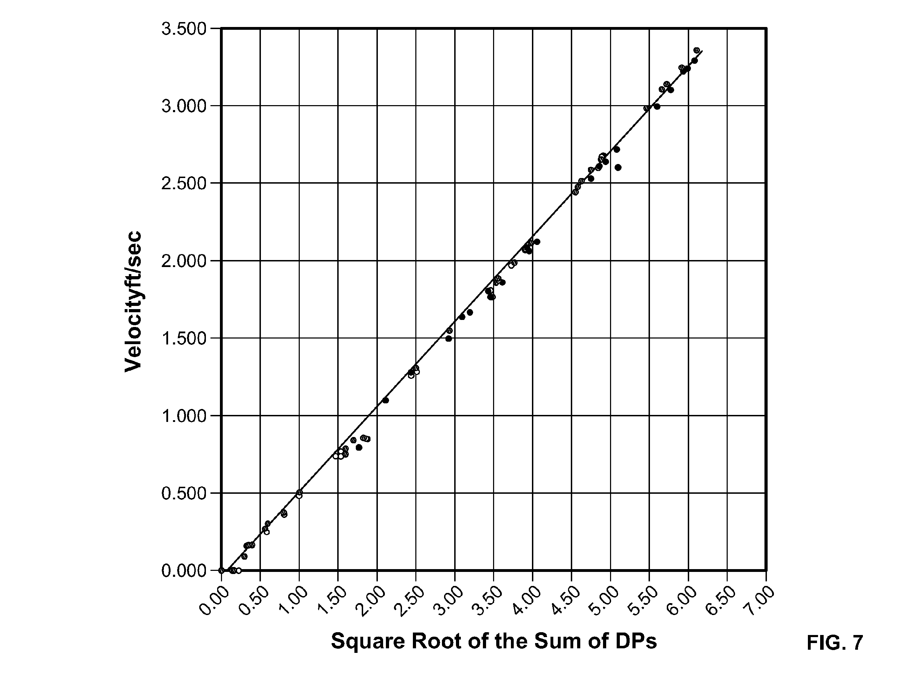

Turning to Figure 7, shown is a plot of flow rate as a function of the square root of the sum of the differential pressures. It has been found that by adding transmitter 18 and transmitter 24, static head and therefore the influence of the specific gravity of the flowing fluid, is cancelled leaving the friction and configuration losses from B to F and C to G combined. In the prior art referenced herein previously, the differential pressure measurements were made on a straight length of conduit thus the pressure drop, due to friction, although significant in the density calculation, was relatively small. The differential pressures measured using the diagonal connections are considerably larger due to the elbow losses. As discussed *supra* the elbow losses are repeatable and testing confirmed that when the differential pressure measurements were added and the square root taken of the sum, the result had a linear relationship with the velocity of the fluid in the conduit. Accordingly, the relationship is:

$$V = k\sqrt{(DP1+DP2)} \text{ where}$$

where

$V$ = is representative of the velocity of the fluid;
$k$ = is representative of an empirical constant determined by calibration;
$DP1$ = is representative of the differential pressure BF; and
$DP2$ = is representative of the differential pressure CG.

The compiled data of two days of testing are plotted in Figure 7. The small degree of scatter is attributed to the error band in the flow measurement instrumentation. The few points which denote a wider scatter are attributed to significant flow changes in the middle of a five minute averaging run and a small zero error was detected and corrected during the tests. The linearity is unaffected by the experimental scatter.

In conclusion, the device shown in Figure 1 produces consistent density measurements of a flowing stream of fluid irrespective of the proximity of the pressure taps to elbows or the velocity of the fluid stream.

Additional features of the method include:

i. the step of measuring the fluid;
ii. determining the temperature of the fluid in a fill leg;
iii. determining the flow rate of the fluid flowing in the conduit; and
iv. determining the flow rate using the values of differential pressure.

**Claims**

1.  A device for determining the specific gravity of a flowing fluid in a conduit, **characterized in that** the device comprises:

    a conduit for receiving said flowing fluid having a uniform cross section with a square wave profile, the legs of said profile being equivalent in length, each leg of said legs having a pressure sensing means; and
    pressure taps associated with each said pressure sensing means, said taps for a respective pressure sensing means being associated with a different leg of said legs.

2.  The apparatus as set forth in claim 1, **characterized in that** said profile has a straight top conduit portion and spaced apart vertical disposed conduit leg portions.

3.  The apparatus as set forth in claim 1, **characterized in that** said device further includes a temperature sensing means.

4.  The apparatus as set forth in claim 1, **characterized in that** said device further includes a pressure transducer.

5.  The apparatus as set forth in claim 4, **characterized in that** said taps on each leg are disposed in similar horizontal planes.

6.  The apparatus as set forth in claim 1, **characterized in that** said profile has an elbow at the point of transition to a leg, said pressure taps being positioned adjacent said elbows.

7.  The apparatus as set forth in claim 1, **characterized in that** said apparatus includes a plurality of pressure taps.

8.  The apparatus as set forth in claim 1, **characterized in that** said apparatus has four pressure taps.

9.  A method for determining the specific gravity of a flowing fluid, wherein the method comprises:

    providing the apparatus as set forth in claim 1;
    passing a fluid to be measured through said conduit;
    measuring the pressure from diagonally oriented taps;
    determining the differential pressure; and
    determining the density of said fluid.

10. The method as set forth in claim 9, said fluid being monophasic.

**FIG. 1**

**FIG. 2**

EP 2 392 910 A2

Cross Taps SG Error for Zero and Full Flow

FIG. 3

Actual SG vs Measured SG

FIG. 4

**FIG. 5**

**FIG. 6**

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2768529 A
- US 6550327 B, Van Berk
- US 3926050 A
- US 6807857 B, Storm, Jr.
- US 5608170 A, Atkinson
- US 5461930 A, Farchi
- NO 94000131 W
- US 5400657 A, Kolpak
- US 4307609 A
- US 5596152 A, Bergervoet
- US 6546811 B
- US 4856344 A
- US 5509303 A
- US 6655221 B
- US 5591922 A
- US 6321585 B
- US 6957586 B
- US 4949572 A
- US 3488996 A
- US 5469749 A
- US 7299707 B
- US 5392645 A

### Non-patent literature cited in the description

- Chemical Engineers Handbook. 3-71